(19) Europäisches Patentamt
European Patent Office
Office européen des brevets

(11) Veröffentlichungsnummer: **0 025 925**
**B1**

# (12) EUROPÄISCHE PATENTSCHRIFT

(45) Veröffentlichungstag der Patentschrift: **09.02.83**

(51) Int. Cl.³: **C 07 C 121/75**, C 07 C 120/00, A 01 N 53/00

(21) Anmeldenummer: **80105352.1**

(22) Anmeldetag: **08.09.80**

## (54) Verfahren zur Herstellung von Alpha-Cyano-phenoxy-benzyl-estern.

(30) Priorität: **20.09.79 DE 2938112**

(43) Veröffentlichungstag der Anmeldung: **01.04.81 Patentblatt 81/13**

(45) Bekanntmachung des Hinweises auf die Patenterteilung: **09.02.83 Patentblatt 83/6**

(84) Benannte Vertragsstaaten: **BE CH DE FR GB IT LI NL**

(56) Entgegenhaltungen:
**FR-A-2 362 106**
**FR-A-2 362 829**

(73) Patentinhaber: **BAYER AG, Zentralbereich Patente, Marken und Lizenzen, D-5090 Leverkusen 1, Bayerwerk (DE)**

(72) Erfinder: **Cölln, Reimer, Dr., In den Birken 67, D-5600 Wuppertal 1 (DE)**

EP 0 025 925 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Herstellung von α-Cyano-phenoxy-benzyl-estern

Die Erfindung betrifft ein neues Verfahren zur Herstellung von bekannten α-Cyano-phenoxy-benzyl-estern.

Es ist bekannt, daß man bestimmte α-Cyano-phenoxy-benzyl-ester, wie z. B. 3-(2,2-Dichlor-vinyl)- oder 3-(2-Chlor-2-(4-chlor-phenyl)-vinyl)-2,2-dimethyl-cyclopropan-1-carbonsäure-(α-cyano-3-phenoxy-benzyl)-ester und -(α-cyano-4-fluor-3-phenoxy-benzyl)-ester oder α-Isopropyl-α-(4-chlor-phenyl)-essigsäure-(α-cyano-3-phenoxy-benzyl)-ester und -(α-cyano-4-fluor-3-phenoxy-benzyl)-ester erhält, wenn man die entsprechenden Säurechloride mit α-Cyano-3-phenoxy-benzylalkohol bzw. α-Cyano-4-fluor-3-phenoxy-benzylalkohol umsetzt (vergleiche DE-OS 2 335 347, 2 709 264, 2 730 515 und GB-PS 1 413 491).

Ausbeute und Qualität der Produkte sind bei diesem Herstellungsverfahren für α-Cyano-phenoxy-benzyl-ester jedoch unbefriedigend. Die Ursache hierfür dürfte hauptsächlich darin bestehen, daß die Ausgangskomponenten α-Cyano-3-phenoxy-benzylalkohol und insbesondere α-Cyano-4-fluor-3-phenoxy-benzylalkohol sehr leicht in 3-Phenoxy-benzaldehyd bzw. 4-Fluor-3-phenoxy-benzaldehyd und Cyanwasserstoff zerfallen und nicht in genügend reiner Form eingesetzt werden können.

Weiter ist bekannt, daß man bestimmte α-Cyano-benzylester, wie z. B. 3-(2,2-Dichlor-vinyl)-2,2-dimethyl-cyclopropan-1-carbonsäure-(α-cyano-3-phenoxy-benzyl)-ester erhält, wenn man entsprechende Carbonsäurehalogenide und Benzaldehyde in Gegenwart wäßriger Lösungen von Natrium- oder Kalium-cyanid oder auch unter Verwendung zweiphasiger Medien aus Wasser und mit Wasser nicht mischbaren Lösungsmitteln, gegebenenfalls unter Verwendung von Phasentransfer-Katalysatoren umsetzt (vergleiche US-PS 3 835 176, 4 110 360, 4 110 363 und 4 123 451).

Es können jedoch verschiedene substituierte Benzaldehyde, welche als Ausgangsstoffe für pestizid wirksame α-Cyano-benzylester von Interesse sind, nur schwer in genügend reiner Form hergestellt werden; Bisulfit-Addukte als reine Derivate hiervon sind jedoch bekannt (vergleiche BE-PS 857 954, 858 127 und DE-OS 2 653 189).

Es wurde nun ein Verfahren zur Herstellung von α-Cyano-phenoxy-benzylestern der Formel I

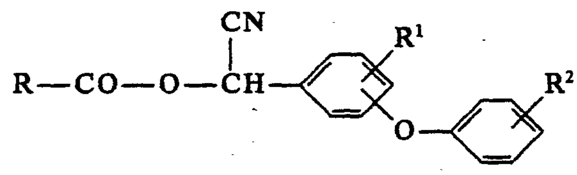

(I)

gefunden, in welcher

R für einen offenkettigen oder cyclischen Alkylrest steht, der gegebenenfalls substituiert ist durch Halogen, Alkyl, Cycloalkyl sowie durch Alkenyl, welches gegebenenfalls durch Halogen und/oder Alkoxy substituiert ist, durch Phenyl oder Styryl, welche gegebenenfalls durch Halogen, gegebenenfalls halogen-substituierte Reste Alkyl, Alkoxy, Alkylendioxy und/oder Alkylthio substituiert sind, durch spirocyclisch verknüpftes, gegebenenfalls halogen-substituiertes Cycloalk(en)yl, welches gegebenenfalls benzanneliert ist, in welcher weiter

$R^1$ und $R^2$ unabhängig voneinander für Wasserstoff oder Halogen stehen,

dadurch gekennzeichnet, daß man Carbonsäurechloride der Formel II

$$R—CO—Cl \quad (II$$

in welcher

R die oben angegebene Bedeutung hat, mit Phenoxy-benzaldehyd-Bisulfit-Addukten der Formel I

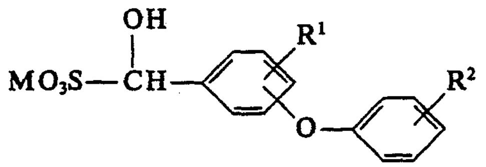

(II

in welcher

$R^1$ und $R^2$ die oben angegebene Bedeutung haben und

M für Natrium oder Kalium steht,

und wenigstens der äquimolaren Menge eines Alkalicyanides (vorzugsweise Natrium- od

Kalium-cyanid), gegebenenfalls in Gegenwart eines Säureakzeptors sowie gegebenenfalls in Gegenwart eines Katalysators und unter Verwendung von Verdünnungsmitteln, bei Temperaturen zwischen 0 und 80° C umsetzt.

Es ist als überraschend anzusehen, daß man aus Carbonsäurechloriden der Formel (II), Alkalicyaniden und Phenoxy-benzaldehyd-Bisulfit-Addukten der Formel (III) nach dem erfindungsgemäßen Verfahren ohne Zwischenisolierung der Phenoxy-benzaldehyde die entsprechenden $\alpha$-Cyano-phenoxy-benzyl-ester in hohen Ausbeuten erhält.

Verwendet man als Ausgangsstoffe beispielsweise 3-(2,2-Dibrom-vinyl)-2,2-dimethyl-cyclopropan-1-carbonsäure-chlorid und das Addukt aus 3-Phenoxy-4-fluor-benzaldehyd und Kaliumbisulfit sowie eine wäßrige Lösung von Natriumcyanid neben Hexan als organischem Lösungsmittel, so kann die Reaktion dieser Verbindungen durch folgendes Formelschema skizziert werden:

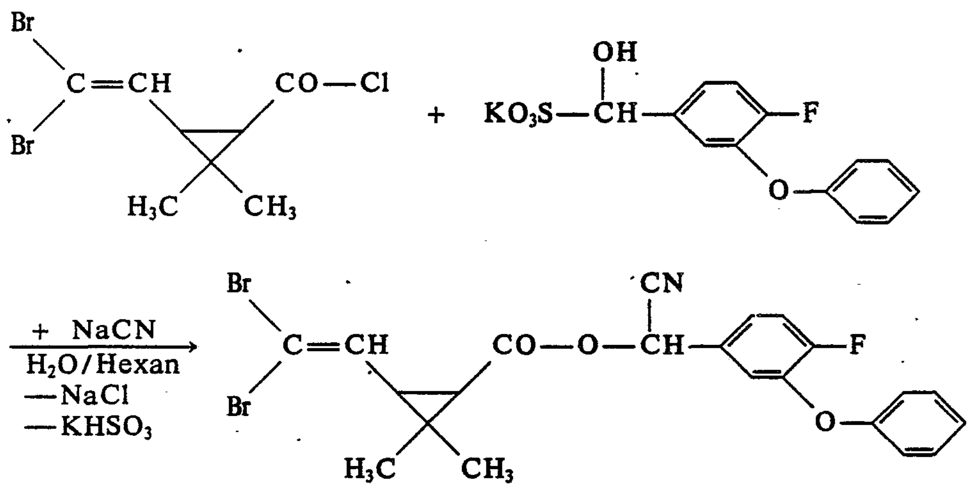


Die als Ausgangsstoffe zu verwendenden Carbonsäurechloride sind durch Formel (II) definiert. Vorzugsweise steht darin

R für den Rest

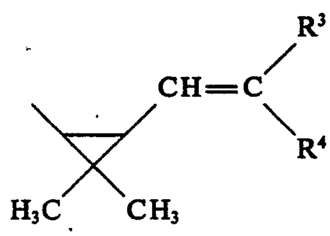

worin

$R^3$ für Wasserstoff, Methyl, Fluor, Chlor oder Brom und

$R^4$ für Methyl, Fluor, Chlor, Brom, $C_1-C_2$-Fluoralkyl oder $C_1-C_2$-Chlorfluoralkyl oder für gegebenenfalls durch Halogen und/oder gegebenenfalls halogen-substituierte Reste $C_1-C_4$-Alkyl, $C_1-C_4$-Alkoxy, $C_1-C_4$-Alkylthio oder $C_1-C_2$-Alkylendioxy substituiertes Phenyl steht oder worin beide Reste $R^3$ und $R^4$ zusammen für $C_2-C_5$-Alkandiyl (Alkylen) stehen;

R steht weiterhin vorzugsweise für den Rest

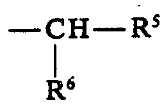

worin

$R^5$ für gegebenenfalls durch Halogen und/oder durch gegebenenfalls halogen-substituierte Reste $C_1-C_4$-Alkyl, $C_1-C_4$-Alkoxy, $C_1-C_4$-Alkylthio oder $C_1-C_2$-Alkylendioxy substituiertes Phenyl steht und

$R^6$ für Isopropyl oder Cyclopropyl steht, oder

R steht für einen der Reste

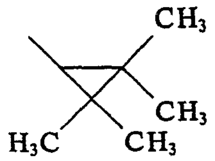

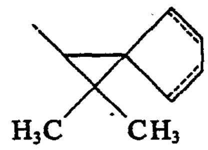

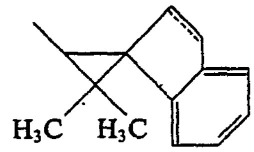

Ganz besonders bevorzugt sind Ausgangsverbindungen der Formel (II), in welcher

R für den Rest

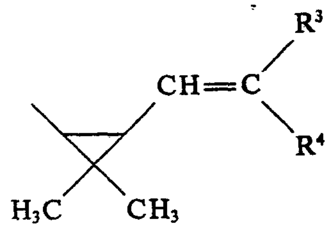

steht, worin

$R^3$ und $R^4$ gleichermaßen für Chlor oder Brom stehen oder
$R^3$ für Chlor oder Brom steht und
$R^4$ für Phenyl, 4-Fluor-phenyl oder 4-Chlor-phenyl steht, oder in welcher

R für den Rest

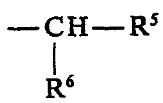

steht, worin

$R^5$ für Phenyl, 4-Chlor-phenyl oder 4-Fluor-phenyl und
$R^6$ für Isopropyl steht.

Als Beispiele für die Ausgangsstoffe der Formel (II) seien genannt:
3-(2,2-Dichlor-vinyl)-, 3-(2,2-Dibrom-vinyl)-,
3-(2-Chlor-2-phenyl-vinyl)-, 3-(2-Chlor-2-(4-fluor-phenyl)-vinyl)- und
3-(2-Chlor-2-(4-chlor-phenyl)-vinyl)-2,2-dimethyl-cyclopropan-1-carbonsäurechlorid.

Die Ausgangsverbindungen der Formeln (II) und (III) sind bereits bekannt (vergleiche DE-OS 2 709 264 und 2 730 515, GB-PS 1 413 491 und 2 000 764 sowie US-PS 3 835 176 und 3 962 458).

Die weiter als Ausgangsstoffe zu verwendenden Phenoxy-benzaldehyd-Bisulfit-Addukte sind durch Formel (III) definiert. Vorzugsweise stehen darin

$R^1$ und $R^2$ für Wasserstoff oder Fluor und
M für Natrium.

Als Beispiele seien die Natriumbisulfit-Addukte von 3-Phenoxy-benzaldehyd, 3-Phenoxy-4-fluor-benzaldehyd, 3-(4-Fluor-phenoxy)-benzaldehyd und 3-(4-Fluor-phenoxy)-4-fluor-benzaldehyd genannt.

Die den Bisulfit-Addukten der Formel (III) zugrunde liegenden Aldehyde sind bekannt (vergleiche DE-OS 2 709 264, 2 739 854 und 2 621 433). Die Bisulfit-Addukte können daraus nach üblichen Methoden, beispielsweise durch Umsetzung mit Natriumbisulfit im 2-Phasen-System Toluol-Wasser bei Raumtemperatur hergestellt werden.

Das erfindungsgemäße Verfahren wird vorzugsweise in einem zweiphasigen System aus Wasser und einem mit Wasser nicht mischbaren organischen Lösungsmittel durchgeführt.

Als mit Wasser nicht mischbare Lösungsmittel werden beim erfindungsgemäßen Verfahren vorzugsweise geradkettige oder verzweigte Alkane oder Cycloalkane mit 5 bis 10 Kohlenstoffatomen, wie z. B. n-Pentan, n-Hexan, n-Heptan, n-Octan, n-Nonan, n-Decan, 2-Methylpentan, 3-Methylpentan, 2-Methylhexan, 2,2,4-Trimethylpentan, Cyclohexan, Methylcyclohexan, oder auch Methylbenzole, wie z. B. Toluol oder Xylole, sowie auch Gemische dieser Kohlenwasserstoffe eingesetzt.

Cyclohexan wird als Lösungsmittelkomponente besonders bevorzugt.

In Wasser lösliche Cyanide, welche beim erfindungsgemäßen Verfahren verwendet werden können, sind beispielsweise Natriumcyanid und Kaliumcyanid; Natriumcyanid wird bevorzugt

verwendet.

Als Säureakzeptoren können die üblichen Säurebindemittel verwendet werden. Beispielsweise seien Alkalihydroxide, wie Natrium- und Kalium-hydroxid, Alkalicarbonate, wie Natrium- und Kalium-carbonat, ferner aliphatische, aromatische oder heterocyclische Amine, wie Triethylamin, N,N-Dimethylanilin, N,N-Dimethylbenzylamin und Pyridin, sowie auch die als Reaktanden eingesetzten Cyanide genannt.

Das erfindungsgemäße Verfahren wird gegebenenfalls unter Verwendung von Katalysatoren durchgeführt. Als solche kommen vor allem Verbindungen in Betracht, welche zum Transfer von Anionen aus Wasser in organische Lösungsmittel geeignet sind. Beispiele hierfür sind Benzyl-triethyl-ammonium-hydrogensulfat, Tetrabutyl-ammoniumbromid und Methyl-trioctyl-ammonium-chlorid (Aliquat 336). Ohne Verwendung solcher Katalysatoren verlängert sich die Reaktionszeit gewöhnlich um das Zwei- bis Dreifache.

Die Reaktionstemperatur wird beim erfindungsgemäßen Verfahren zwischen 0 und 80° C, vorzugsweise zwischen 10 und 50° C, insbesondere zwischen 15 und 35° C gehalten.

Das Verfahren wird gewöhnlich bei Normaldruck durchgeführt.

Auf 1 Mol Säurechlorid der Formel (II) setzt man zwischen 0,9 und 1,2 Mol, vorzugsweise zwischen 0,95 und 1,1 Mol Bisulfit-Addukt der Formel (III) und 1 bis 1,5 Mol, vorzugsweise 1 bis 1,2 Mol Alkalicyanid sowie gegebenenfalls 1 bis 1,5 Mol, vorzugsweise 1 bis 1,2 Mol eines Säureakzeptors ein. Für den Fall, daß das Alkalicyanid auch als Säureakzeptor verwendet wird, werden hiervon zwischen 2 und 3 Mol, vorzugsweise zwischen 2 und 2,4 Mol eingesetzt.

In einer bevorzugten Ausführungsform des erfindungsgemäßen Verfahrens wird ein Bisulfit-Addukt der Formel (III) mit einem Alkalicyanid, gegebenenfalls einem Säureakzeptor und gegebenenfalls einem Katalysator in einem zweiphasigen Reaktionsmedium aus Wasser und einem der oben angegebenen organischen Lösungsmittel vorgelegt, ein Carbonsäurechlorid der Formel (II) langsam eindosiert und das Reaktionsgemisch mehrere Stunden gerührt.

Zur Aufarbeitung, welche nach üblichen Methoden durchgeführt werden kann, wird beispielsweise mit Wasser verdünnt, die organische Phase abgetrennt, neutral gewaschen, getrocknet und filtriert. Vom Filtrat wird das Lösungsmittel unter vermindertem Druck sorgfältig abdestilliert, wobei das Produkt als Rückstand verbleibt.

Die als bevorzugte Ausgangsverbindungen der Formel (II) genannten 3-Alkenyl-2,2-dimethyl-cyclopropan-1-carbonsäurechloride weisen asymmetrische Kohlenstoffatome auf und können, wie auch die entsprechenden Produkte der Formel (I) in einer entsprechenden Anzahl von stereoisomeren Formen auftreten. Das erfindungsgemäße Verfahren ist bei allen stereoisomeren Formen anwendbar, die Monfiguration am Cydopropan-Gerüst bleibt dabei erhalten.

Die nach dem erfindungsgemäßen Verfahren erhältlichen α-Cyano-phenoxy-benzyl-ester können als Schädlingsbekämpfungsmittel verwendet werden (vergleiche DE-OS 2 709 264).

## Beispiel 1

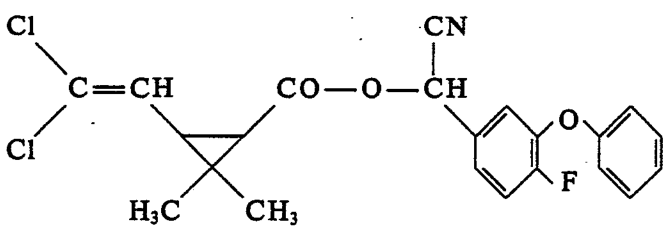

Zu einem Gemisch von 32,0 g (0,1 Mol) 3-Phenoxy-4-fluor-benzaldehyd-natriumbisulfit-addukt, 150 ml Cyclohexan, 0,5 g Tetrabutylammoniumbromid, 11,8 g (0,24 Mol) Natriumcyanid und 30 ml Wasser tropft man unter Rühren bei 20—25° C 22,7 g (0,1 Mol) 3-(2,2-Dichlorvinyl)-2,2-dimethyl-cyclopropan-carbonsäurechlorid und läßt die Mischung 4 Stunden bei 25° C rühren. Man setzt 50 ml Wasser hinzu, trennt die Phasen und wäscht die organische Phase einmal mit Wasser, dann mit verdünnter Salzsäure und schließlich so oft mit Wasser, daß das letzte Waschwasser neutral reagiert. Die organische Phase wird mit Natriumsulfat getrocknet, im Vakuum vom Lösungsmittel befreit und der Rückstand für 30 Minuten bei 70° C im Vakuum von 3 mbar belassen. Man erhält so 41,2 g eines bräunlichen, in der Kälte zähen Öles, das sich im NMR-Spektrum, in der Dünnschichtchromatografie sowie im Hochdruckflüssigkeitschromatogramm als vollkommen identisch mit dem nach DE-OS 2 709 264, Beispiel 6, erhaltenen Produkt erweist. Die Ausbeute beträgt 95% der Theorie; Reinheit >90%.

Beispiel 2

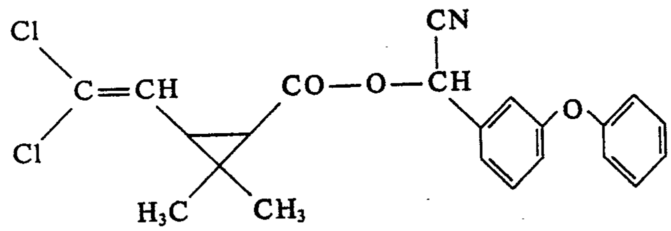

Unter Verwendung von 30,2 g 3-Phenoxy-benzaldehyd-natriumbisulfit-addukt wird bei sonst gleicher Verfahrensweise wie in Beispiel 1 beschrieben das Produkt der obigen Formel in einer Menge von 39,5 g in Form eines bräunlichen Öles erhalten.
Ausbeute 95%; Reinheit >90%.

Analog Beispiel 1 und/oder 2 erhält man:

Beispiel 3

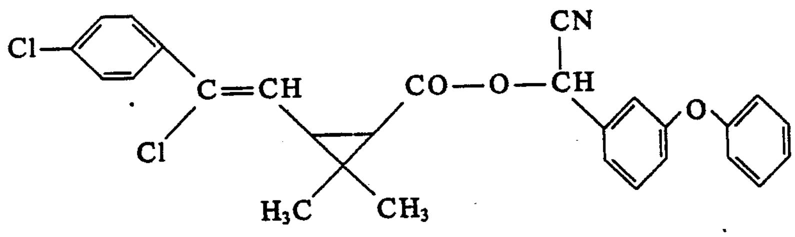

Ausbeute: ca. 95%
Reinheit: >90%

Beispiel 4

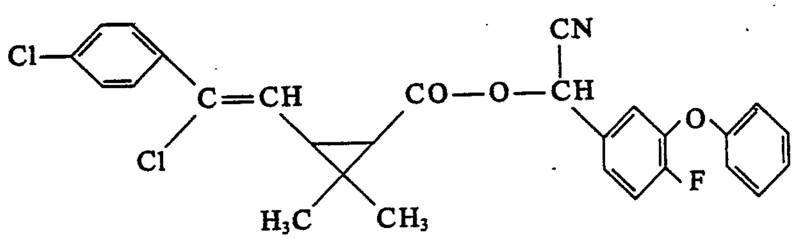

Ausbeute: 95,6%
Reinheit: 93,2%

Beispiel 5

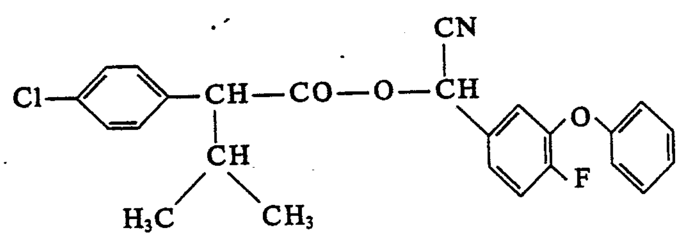

Ausbeute: ca. 95%
Reinheit: > 90%

Beispiel 6

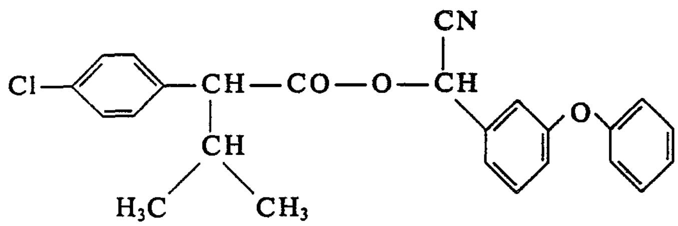

Ausbeute: ca. 95%
Reinheit: > 90%

Beispiel 7

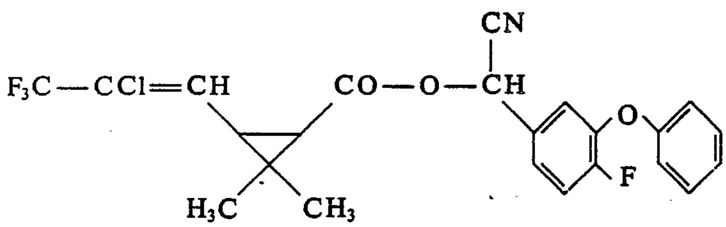

Ausbeute: ca. 95%
Reinheit: > 90%

Beispiel 8

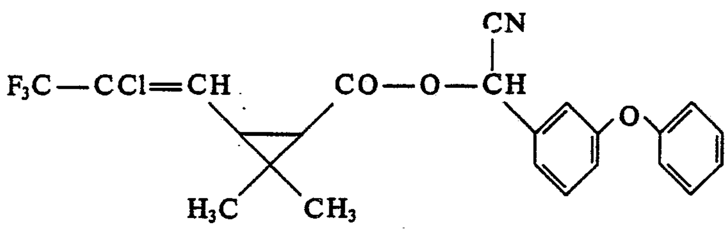

Ausbeute: ca. 95%
Reinheit: > 90%

**Patentanspruch**

Verfahren zur Herstellung von α-Cyano-phenoxy-benzyl-estern der Formel I

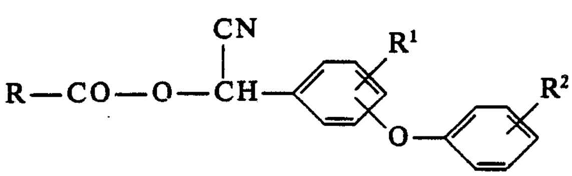
(I)

in welcher

R für einen offenkettigen oder cyclischen Alkylrest steht, der gegebenenfalls substituiert ist durch Halogen, Alkyl, Cycloalkyl, sowie durch Alkenyl, welches gegebenenfalls durch Halogen und/oder Alkoxy substituiert ist, durch Phenyl oder Styryl, welche gegebenenfalls durch Halogen, gegebenenfalls halogen-substituierte Reste Alkyl, Alkoxy, Alkylendioxy und/oder Alkylthio substituiert sind, durch spirocyclisch verknüpftes, gegebenenfalls halogen-substituiertes Cycloalk(en)yl, welches gegebenenfalls benzanneliert ist, in welcher weiter

$R^1$ und $R^2$ unabhängig voneinander für Wasserstoff oder Halogen stehen,

dadurch gekennzeichnet, daß man Carbonsäurechlorid der Formel II

R—CO—Cl (II)

in welcher

R die oben angegebene Bedeutung hat, mit Phenoxy-benzaldehyd-Bisulfit-Addukten der Formel III

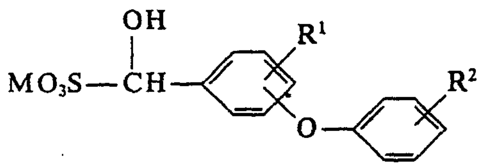

(III)

in welcher

$R^1$ und $R^2$ die oben angegebene Bedeutung haben und
M für Natrium oder Kalium steht,

und wenigstens der äquimolaren Menge eines Alkalicyanides, gegebenenfalls in Gegenwart eines Säureakzeptors sowie gegebenenfalls in Gegenwart eines Katalysators und unter Verwendung von Verdünnungsmitteln, bei Temperaturen zwischen 0 und 80° C umsetzt.

**Claim** -

Process for the preparation of α-cyano-phenoxy-benzyl esters of the formula I

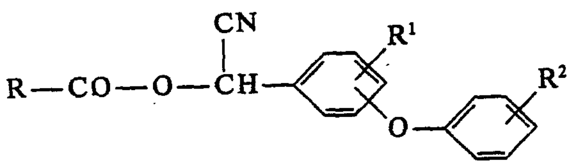

(I)

in which

R represents an open-chain or cyclic alkyl radical which is optionally substituted by halogen, alkyl, cycloalkyl, alkenyl which is optionally substituted by halogen and/or alkoxy, by phenyl or styryl, which are optionally substituted by halogen or optionally halogen-substituted alkyl, alkoxy, alkylenedioxy and/or alkylthio radicals, or by spirocyclically linked, optionally halogen-substituted cycloalk(en)yl which is optionally benzo-fused and in which
$R^1$ and $R^2$ independently of one another represent hydrogen or halogen,

characterised in that carboxylic acid chlorides of the formula II

R—CO—Cl (II)

in which

R has the meaning indicated above, are reacted with phenoxy-benzaldehyde/bisulphite adducts of the formula III

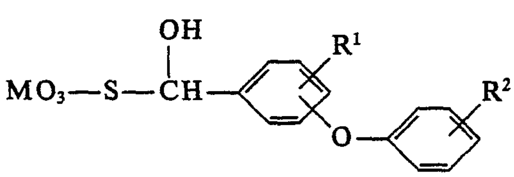

(III).

in which

$R^1$ and $R^2$ have the meaning indicated above and
M represents sodium or potassium,

and at least the equimolar amount of an alkali metal cyanide, if appropriate in the presence of an acid acceptor and if appropriate in the presence of a catalyst and using diluents, at temperatures between 0 and 80° C.

## Revendication

Procédé pour la fabrication d'esters d'α-cyanophénoxybenzyle de formule I

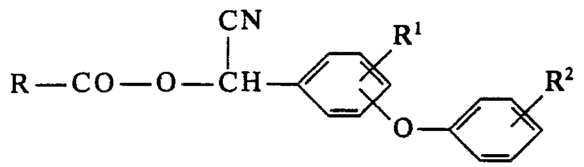

(I)

dans laquelle

R représente un reste alkyle à chaîne ouverte ou cyclique, qui est éventuellement substitué par un halogène ou un reste alkyle, cycloalkyle, ainsi que par un reste alcényle, qui peut éventuellement être substitué par un halogène et/ou un reste alcoxy, par un groupe phényle ou styryle, qui peuvent éventuellement être substitués par un halogène, des restes alkyle, alcoxy, alkylènedioxy et/ou alkylthio éventuellement halogénosubstitués, par un reste cycloalk(én)yle éventuellement halogénosubstitué à jonction spirocyclique, qui est éventuellement accolé à un noyau benzénique, dans laquelle en outre

$R^1$ et $R^2$ représentent, indépendamment l'un de l'autre, l'hydrogène ou un halogène,

caractérisé en ce que l'on fait réagir des chlorures d'acides carboxyliques de formule II

$$R-CO-Cl \quad (II)$$

dans laquelle

R a la signification indiquée ci-dessus, avec des adducts phénoxybenzaldéhyde-bisulfite de formule III

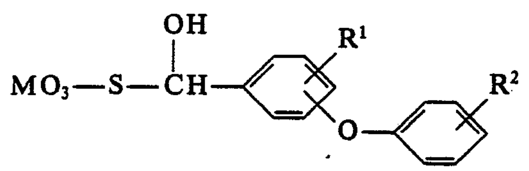

(III)

dans laquelle

$R^1$ et $R^2$ ont la signification indiquée ci-dessus et

M représente le sodium ou le potassium,

et au moins la quantité équimolaire d'un cyanure alcalin, éventuellement en présence d'un accepteur d'acide et éventuellement en présence d'un catalyseur et en utilisant des agents diluants, à des températures comprises entre 0 et 80°C.